# EUROPEAN PATENT APPLICATION

(11) **EP 4 250 746 A1**
(43) Date of publication of application: **27.09.2023**
(21) Application number: 22382270.1
(22) Date of filing: 24.03.2022
(51) Int. Cl.: H04N 21/25, H04N 21/262

(54) **METHOD FOR ADMINISTERING AN ADAPTIVE AUDIOVISUAL CONTENT MANAGEMENT PROGRAM**

(71) Applicant: Scenikus Global Marketplace, S.L, 28039 Madrid (ES)
(72) Inventor: Carreras Aznar, Jaume, 28039 Madrid (ES); Uceda Rico, José Carlos, 28039 Madrid (ES)
(74) Representative: Isern Patentes y Marcas S.L.

(57) **Abstract**

The present invention relates to a method for administering an adaptive audiovisual content management program, and more specifically to a method implemented in a distributed computing system that enables the configuration and functions of a program to be adapted based on the interactions of one or more users.

## Description

### Technical field of the invention

The present invention relates to a method for administering an adaptive audiovisual content management program, and more specifically to a method implemented in a distributed computing system that enables the configuration and functions of a program to be adapted based on the interactions of one or more users.

### Background of the invention

The recent success of so-called audiovisual content aggregators and other customised service providers shows that there is an increasing demand from users for on-demand customised audiovisual content. These new trends in consumer habits force service providers to constantly offer new functionalities that adjust to consumer needs.

However, constantly modifying the functionalities offered by a particular content management service to adapt to the user experience can pose enormous challenges, especially in cases where there is a substantial volume of users.

In addition, the pricing model for these services is often dependent on the functionalities offered, the type of content, etc., and is sensitive to the volume of users it serves and to the geographical location.

Therefore, it is evident that there is a demand for a method that enables the functionalities and configuration of an audiovisual content management program to be adapted.

### Description of the invention

The present invention proposes a solution to the foregoing problems by means of an energy recovery system and a vehicle as described below.

In an inventive aspect, the invention provides a *method for administering an adaptive audiovisual content management program implemented by a distributed computing system, wherein the content management program comprises a set of operating configurations that can be combined with each other, corresponding to subroutines of the content management program;*
*wherein the distributed computing system comprises at least one server, configured to store the audiovisual content and run the adaptive content management program, and at least one user equipment in data communication with the server, and configured to show the audiovisual content to a user;*
*wherein the method comprises, by means of the server, the steps of:*
   *receiving, from the at least one user equipment, a set of user behavioural data, storing the user behavioural data in a database of the server,*
   *feeding the user behavioural data to a previously trained machine learning algorithm,*
   *inferring, by means of the machine learning algorithm, a combination of program operating configurations based on a maximisation criterion of one or more program operating parameters, and running one or more program operating configurations based on the result of the inference.*

Throughout this document, distributed computing system will be understood as a set of computers interconnected with each other, preferably by means of a data communication network, such as the Internet; the set of computers comprises at least one server, operated by an administrator, wherein the content management program is run, and one or more clients or pieces of user equipment, which are preferably user devices authorised to access a service to access audiovisual content; in a preferred embodiment, the pieces of user equipment are smartphones, laptops or tablets. Preferably, the audiovisual management program is configured to also offer other functionalities in addition to audiovisual content management, such as, for example, services for acquiring goods and services, and audio and video call functionalities, as well as access to social networks; preferably, these functionalities can also be adapted according to the method of the invention.

It should also be understood that the program operating configurations are subroutines or functions of the program that implement specific services or functionalities, or that modify the behaviour of these services or functionalities. User behavioural data should be understood to be data resulting from the measurement or monitoring of parameters that measure the interaction of the user with the program; examples of user behavioural parameters are the geographical location of the user equipment from which the multimedia content is accessed, the type of content demanded or the time that the interaction of a user equipment with the program lasts. Program operating data should be understood as data obtained from monitoring or measuring program operating parameters, such as traffic or number of connected pieces of user equipment, number of service subscriptions, or service response latency.

The interaction of the users depends on the functionalities implemented by the management program operating configurations, which in turn have an effect on the program operating parameters; therefore, to maximise one or more program operating parameters, the operating configurations can be dynamically modified based on user behavioural data, which can advantageously be achieved by means of a previously trained machine learning algorithm, which allows inferring what operating configuration or combination of configurations of the management program provides the desired result of the program operating parameters. It should also be understood that the algorithm can be configured to provide a result based on a criterion other than the maximisation of one or more operating parameters, such as, for example, a minimisation, an equalisation to a certain value, or a minimum or maximum variation of one or more operating parameters.

In a particular embodiment, *the step of inferring a combination of operating configurations, comprises:*
*detecting user behavioural patterns in user behavioural data, relating user behavioural patterns to one or more program operating parameters,*
*determining a combination of operating configurations that enables one or more program operating parameters to be maximised.*

The machine learning algorithm may be of a conventional type and configuration that meets the requirements of the method, such as, for example, an artificial neural network with at least one hidden layer. The inference step of the method, according to this embodiment, comprises detecting behavioural patterns from the user behavioural data, associating them with one or more operating parameters, and obtaining a result that enables one or more of these parameters to be maximised.

In one embodiment, the machine learning algorithm infers results in a way that will suggest the required changes in operating configurations, from least to greatest impact, based on the estimated time to perform tests, traffic, etc.

In a particular embodiment, *the method further comprises, by means of the server, the steps of:*
*receiving a set of program operating data corresponding to one or more program operating parameters,*
*storing the program operating data in the database, feeding the program operating data to the machine learning algorithm.*

The machine learning algorithm may incorporate reinforcement learning or partially supervised reinforcement learning features; in addition to the user behavioural data, in this embodiment, a set of data from a program operating parameters log, in particular program operating data obtained after running one or more program operating configurations according to an inference result, is also fed to the machine learning algorithm and enables the inference result to be improved. Advantageously, this enables the algorithm to be fedback with program operating data and automatically add or change operating configurations to automatically adapt to the situation. In other embodiments, the program operating data comes from a historical operating parameters log.

In a particular embodiment, *the method further comprises, by means of the server, the step of processing the program operating data by means of a linear regression process.*

Advantageously, the program can detect whether deviations from the desired behaviour have their origin in the industry in general, in the income or business model, in the design model, etc.

In a particular embodiment, *the machine learning algorithm is further configured to infer a modification in the number and location of the servers in the computing system based on a prediction of variation in the number and geographical location of pieces of user equipment connected to the computing system.*

As a complement to the dynamic adaptation of the program operating configurations, the method provides, according to this embodiment, an adaptation of the hardware or distributed computing system that serves as infrastructure for the management program; a possible adaptation is aimed at increasing the number of servers, which can be expanded based on, for example, an increase in traffic or the geographical location of the pieces of user equipment demanding the services of the program. This modification may be the result of measured data, or of a prediction of the evolution of the demand for services. Advantageously, the method provides an indication to expand a server infrastructure in the cloud as close as possible to a specific geographical area, in order to minimise latencies.

In a particular embodiment, *the machine learning algorithm is further configured to infer adaptations of the audiovisual content shown by a user equipment based on the geographical location of a user equipment or on a prediction of the geographical location of a set of pieces of user equipment.*

The adaptation of the program also comprises, in this embodiment, an adaptation of the audiovisual content that is displayed on the pieces of user equipment; as a complement, other types of program features can also be adapted, such as the ordering of the content or the language of the interface.

In a particular embodiment, *adapting the content comprises showing payment functions on the user equipment with a currency corresponding to the geographical location of the user equipment.*

Advantageously, the program includes functionalities that enable the payment of a product or a service, and that the proposed method allows adapting to the geographical location of a user equipment, achieving a customisation of the service.

In a particular embodiment, *the step of storing the user behavioural data in the database of the server, or the step of storing the program operating data in the database, or both, is implemented according to an extract, transform and load, ETL, process.*

The extract, transform and load (ETL) process is a process that enables data to be obtained from multiple sources, formatting and debugging them, and then storing them in a database for analysis or processing. Advantageously, this process makes it possible to harmonise and combine data from a large number of pieces of user equipment and format them in order to be able to process them according to the method of the present invention.

These and other features and advantages of the invention will be apparent from the description of the preferred, but not exclusive, embodiments, which are illustrated by way of non-limiting example in the accompanying drawings.

### Brief description of the drawings

- Figures 1, 2, 3: show flow charts corresponding to different exemplary embodiments of the method of the present invention.
- Figures 4a, 4b: show two examples of the distributed computing system wherein the present invention can be implemented.

### Detailed description of an exemplary embodiment

Numerous specific details are set forth in the following detailed description in the form of examples to provide a thorough understanding of the relevant teachings. However, it will be apparent to those skilled in the art that the present teachings can be practiced without such details.

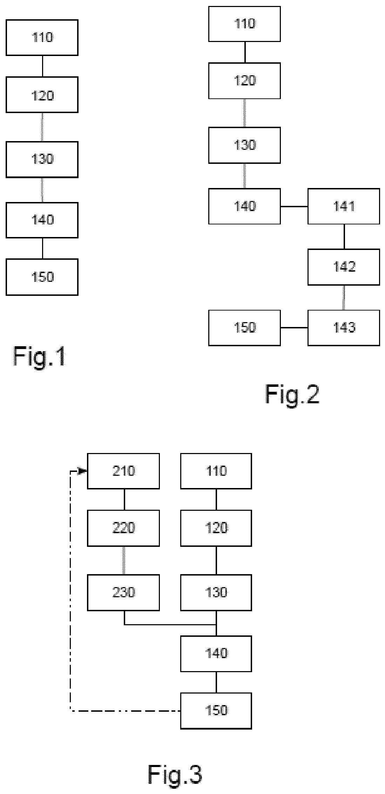

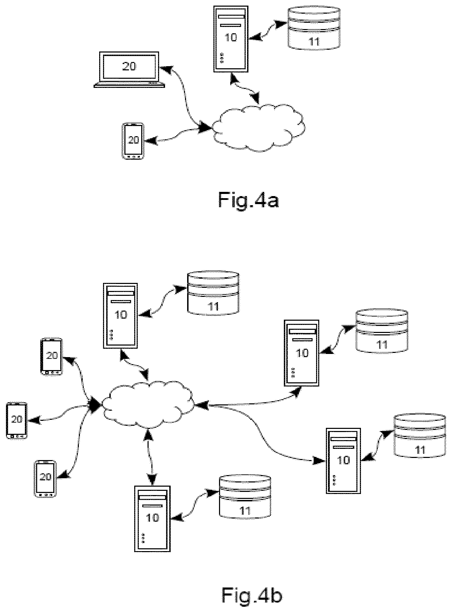

Figure 1 shows a preferred exemplary embodiment of the method of the present invention; in this example, the program is a video-on-demand management program, and the method for managing it is run on a distributed computing system as shown in Figure 4a. This computer system is a simple example comprising a server (10) with a database (11), connected to a set of pieces of user equipment (20), via the Internet, and for simplicity only two examples are shown in the figure: a smartphone and a laptop. Furthermore, as shown in Figure 4b, the distributed computing system may comprise a larger number of servers (10) interconnected via the internet, and a larger number of pieces of user equipment (20) connected to the service. Users have a subscription to the video-on-demand service, and their pieces of user equipment (20) have access to the program front end by means of a mobile application; this mobile application is configured to monitor the interaction of the user and transmit the resulting behavioural data to the server (10). In the example described, the behavioural data comprises the location of the user and the type of video the user demands.

The behavioural data it obtains is debugged and formatted by means of an ETL process, and then is sent to the server (10), which receives it (110) and stores it (120) in the database (11). In another example, shown in Figure 3, the server (10) also receives (210) program operating data corresponding to one or more program operating parameters, also processed by means of an ETL process, and stores them (210) in the database; this data may come from a historical log of program operating parameters, or more preferably, from monitoring of program operating parameters after running a program operating configuration in a previous iteration, giving rise to a feedback system; this feedback is especially applicable when the machine learning algorithm is configured as a reinforcement learning algorithm or a partially supervised reinforcement learning algorithm. In the example described, the program operating data comprises the number of subscriptions and the latency of the video transmission.

Next, the server (10) feeds (130, 230) behavioural data and the operating data to a machine learning algorithm, which in the described example is an artificial neural network previously trained with a suitable data set.

According to the example shown in Figure 2, when starting the inference step (140), the algorithm detects (141) behavioural patterns in the location of the users and the type of video they demand, relates them (142) to the number of subscriptions and the latency of the video transmission, to finally determine (143) the combination of program configurations that enable latency to be minimised and the number of subscriptions to be maximised. Then the server (10) runs (150) the changes activating the desired configurations.

In other exemplary embodiments, by means of the user behavioural data, and in particular by means of the location of the pieces of user equipment (20), the algorithm analyses the geographical distribution of the demand for the service and, based on the current location of the server(s) (10) and the latency of the service, infers a new geographical distribution of the servers (10); optionally, the algorithm can determine the desirability of offering in the program front end a payment service in a particular currency, corresponding to a geographical location with a high demand, as well as the option to order the videos based on local content preferences, in a particular language, etc.

## Claims

1. A method for administering an adaptive audiovisual content management program implemented by a distributed computing system, wherein the content management program comprises a set of operating configurations that can be combined with each other, corresponding to subroutines of the content management program;
wherein the distributed computing system comprises at least one server (10), configured to store the audiovisual content and run the adaptive content management program, and at least one user equipment (20) in data communication with the server (10), and configured to show the audiovisual content to a user;
wherein the method comprises, by means of the server (10), the steps of:
receiving (110), from the at least one user equipment (20), a set of user behavioural data,
storing (120) the user behavioural data in a database (11) of the server (10),
feeding (130) the user behavioural data to a previously trained machine learning algorithm,
inferring (140), by means of the machine learning algorithm, a combination of program operating configurations based on a maximisation criterion of one or more program operating parameters, and
running (150) one or more program operating configurations based on the result of the inference.

2. The method according to the preceding claim, wherein the step of inferring (140) a combination of operating configurations, comprises:
detecting (141) user behavioural patterns in user behavioural data,
relating (142) user behavioural patterns to one or more program operating parameters,
determining (143) a combination of operating configurations that enables one or more program operating parameters to be maximised.

3. The method according to any of the preceding claims, wherein the method further comprises, by means of the server (10), the steps of:
receiving (210) a set of program operating data corresponding to one or more program operating parameters,
storing (220) the program operating data in the database (11), feeding (230) the program operating data to the machine learning algorithm.

4. The method according to the preceding claim, wherein the method further comprises, by means of the server (10), the step of processing the program operating data by means of a linear regression process.

5. The method according to any of the preceding claims, wherein the machine learning algorithm is further configured to infer a modification in the number and location of the servers (10) of the computing system based on a prediction of variation in the number and geographical location of the pieces of user equipment (20) connected to the computing system.

6. The method according to any of the preceding claims, wherein the machine learning algorithm is further configured to infer adaptations of the audiovisual content shown by a user equipment (20) based on the geographical location of a user equipment (20) or on a prediction of the geographical location of a set of pieces of user equipment (20).

7. The method according to the preceding claim, wherein the adaptation of the content comprises showing payment functions on the user equipment (20) with a currency corresponding to the geographical location of the user equipment (20).

8. The method according to any of the preceding claims, wherein the step of storing the user behavioural data in the database (11) of the server (10), or the step of storing the program operating data in the database (10), or both, are implemented according to an extract, transform and load, ETL, process.
